Europäisches Patentamt

European Patent Office

Office européen des brevets

(11) Veröffentlichungsnummer: **0 281 815 B1**

# EUROPÄISCHE PATENTSCHRIFT

(45) Veröffentlichungstag der Patentschrift: **03.06.92**

(51) Int. Cl.5: **C04B** 35/60, B22D 11/06, //C09K3/14

(21) Anmeldenummer: **88102395.6**

(22) Anmeldetag: **18.02.88**

(54) **Verfahren zum kontinuierlichen Abkühlen und Erstarren von Metalloxyden durch Stranggiessen.**

(30) Priorität: **11.03.87 DE 3707870**

(43) Veröffentlichungstag der Anmeldung:
**14.09.88 Patentblatt 88/37**

(45) Bekanntmachung des Hinweises auf die Patenterteilung:
**03.06.92 Patentblatt 92/23**

(84) Benannte Vertragsstaaten:
**AT CH DE ES FR GB IT LI**

(56) Entgegenhaltungen:
**EP-A- 0 057 651
GB-A- 2 010 736**

**PATENT ABSTRACTS OF JAPAN, Band 8, Nr.
160 (M-312)[1597], 25. Juli 1984; & JP-A-59 56
950 (NIPPON KOKAN K.K.) 02-04-1984**

(73) Patentinhaber: **LONZA AG**

**Gampel/Wallis(CH)**

(72) Erfinder: **Dietrich, Rainer, Dr.
Thiersteinerrain 65
CH-4059 Basel(CH)**
Erfinder: **Burkardt, Norbert
Kandelstrasse 5
W-7500 Karlruhe(DE)**
Erfinder: **Kuhn, Peter, Prof.Dr.
Prankelstrasse 61
W-6940 Weinheim(DE)**

(74) Vertreter: **Finck, Dieter et al
Patentanwälte v. Füner, Ebbinghaus, Finck
Mariahilfplatz 2 & 3
W-8000 München 90(DE)**

## Beschreibung

Die Erfindung betrifft ein Verfahren zum kontinuierlichen Abkühlen und Erstarren von Metalloxyden durch Stranggießen nach dem Oberbegriff des Patentanspruchs.

Ein solches Verfahren ist bereits aus der DE-PS 1 259 762 bekannt, bei welchem die Metalloxydschmelze auf die Umfangsfläche einer innen gekühlten Walze auflaufen gelassen wird, dort erstarrt und als plastisches Band zwischen einem Spalt hindurchgeführt wird, der zwischen der Kühlwalze und einer Quetschwalze gebildet wird, die senkrecht zum Spalt verschiebbar angeordnet ist und gegen die Abkühlwalze über einen Seilzug mit einem Gewicht mit einer vorgegebenen Quetschkraft gedrückt wird. Dadurch löst sich das sich im plastischen Zustand befindliche Metalloxydband von der Abkühlwalze ab und wird von der Umfangsfläche der Abkühlwalze so weggebogen, daß es auf einem gekühlten horizontalen Band abtransportiert werden kann.

Da bei dem bekannten Verfahren die Schmelze bereits vor dem Einlauf in den Walzenspalt erstarrt ist, bildet sich zwischen den Walzen keine Schmelzenansammlung, wodurch auch keine stirnseitigen Dichtungselemente erforderlich werden. Durch die Verschiebbarkeit der Quetschwalze senkrecht zum Walzenspalt wird zwar ein Lagerbruch vermieden, wenn eine sehr dicke Materialschicht auf der Abkühlwalze erstarrt ist, jedoch ist eine vorgegebene Einstellung des Walzenspaltes nicht möglich. Das mit dem bekannten Verfahren erreichte Produktband hat eine stark schwankende Dicke, was sich nachteilig auf die Gleichmäßigkeit der aus dem Produktband gewonnenen Schleifkörner auswirkt.

Aus der EP- B1-o o57 651 ist es bekannt, durch Stranggießen Metalloxydschmelzen dadurch abkühlen und erstarren zu lassen, daß die Schmelze in den konvergierenden Zwischenraum von zwei innen gekühlten Walzen mit parallelen Achsen eingeführt wird, die sich mit im wesentlichen gleicher Umfangsgeschwindigkeit gegenläufig drehen. Die Drehzahl der Walzen und ihre Kühlleistung sollen dabei so geregelt werden, daß in der Ebene der Drehachsen in dem Walzenspalt zwischen den beiden äußeren erstarrten Schichten noch ein flüssiger Film vorhanden ist, der sich auch noch über eine geringe Länge nach dem Walzenspalt erstrekken soll.

Bei diesem bekannten Verfahren wird ein gleichbleibender Walzenspalt vorgegeben, so daß, wenn erstarrtes Material durch den Walzenspalt hindurchgedrückt wird, ein Lager-oder Wellenbruch auftreten kann.

Die der Erfindung zugrunde liegende Aufgabe besteht nun darin, das Verfahren der eingangs genannten gattungsgemäßen Art so auszubilden, daß die Banddicke des erstarrten Metalloxyds im wesentlichen konstant gehalten werden kann.

Diese Aufgabe wird ausgehend von dem gattungsgemäßen Verfahren durch die im Patentanspruch angegebenen Merkmale gelöst.

Erfahrengsgemäß ist es nicht möglich, eine gleichbleibende Füllhöhe im Eingußraum zwischen den Walzen, also einen konstanten Kontaktwinkel zwischen Schmelze und Walzen aufrecht zu erhalten, da die Konstanthaltung des Schmelzenstroms sehr schwierig ist. Mit der erfindungsgemäßen Regelung ist es nun möglich, unabhängig von diesem Kontaktwinkel die Stärke des gebildeten Produktbandes im wesentlichen konstant zu halten, da die Erzielung gleichbleibender Abkühlgeschwindigkeiten gewährleistet ist. Durch Drehzahlerhöhung wird die Kontaktzeit der Schmelze mit den Walzen geringer, wodurch eine Verringerung der Banddicke erreicht wird, während durch eine Absenkung der Drehzahl und die dadurch bedingte Steigerung der Kontaktzeit die Dicke des Bandes zunimmt. Durch entsprechende Feinabstimmung dieser Regelung kann die Dicke des erstarrten Metalloxydbandes ziemlich genau konstant gehalten werden, so daß die daraus gewonnenen Schleifkörner im wesentlichen gleiche Eigenschaften haben.

An den Walzenoberflächen haftenbleibendes erstarrtes Metalloxyd wird mit Hilfe von Abstreifern beseitigt. Wenn an den Walzenoberflächen eine gleichmäßige dünne Schicht aus erstarrtem Metalloxyd haften bleibt, die vom Abstreifer nicht entfernt wird, ermöglicht die erfindungsgemäße Regelung trotzdem die Bildung eines Bandes aus erstarrtem Metalloxyd mit im wesentlichen gleichbleibender Dicke.

Als Walzen können zylindrische Walzen, Kegelwalzen, Kombinationen davon oder Walzen anderer Gestaltungen verwendet werden, solange diese das gewünschte Abkühlen und Erstarren und den Abtransport durch den Walzenspalt zulassen. Der Eingußraum über den Walzen wird stirnseitig von entsprechend ausgebildeten Dichtungselementen abgeschlossen.

## Patentansprüche

1. Verfahren zum kontinuierlichen Abkühlen und Erstarren von Metalloxyden durch Stranggießen, bei welchem eine Produktschmelze zwischen zwei umlaufenden Walzen abgekühlt wird, das Produkt als erstarrtes Band aus dem Spalt zwischen den Walzen herausgeführt wird, wenigstens eine der Walzen zur Änderung der Dicke des Spaltes verschoben wird und die Walzen mit einer bestimmten Kraft senkrecht zum Spalt gegeneinander gepreßt werden, dadurch **gekennzeichnet,** daß die Dicke des durch die jeweilige Produktbandbreite vorgegebenen Spaltes gemessen wird, daß die Abweichung der gemessenen Dicke von einem Sollwert bestimmt wird, und daß anhand dieser Abweichung die Walzendrehzahl so geregelt wird, daß sie bei bezogen auf den Sollwert abnehmender Banddicke im Spalt erniedrigt und bei bezogen auf den Sollwert zunehmender Banddicke im Spalt erhöht wird.

## Claims

1. Process for the continuous cooling and setting of metal oxides by continuous casting, in which a product melt is cooled between two revolving rollers, the product is passed out of the gap between the rollers as a solidified band, at least one of the rollers is displaced to vary the thickness of the gap, and the rollers are pressed against one another with a specified force perpendicular to the gap, characterised in that the thickness of the gap determined by the respective product band width is measured, in that the deviation of the measured thickness from a reference value is determined, and in that by means of this deviation the roller speed is so adjusted that it is reduced if the band thickness in the gap decreases relative to the reference value, and is increased if the band thickness in the gap increases relative to the reference value.

## Revendications

1. Procédé de refroidissement et de durcissement continus d'oxydes métalliques par coulée continue, dans lequel une masse fondue du produit est refroidie entre deux cylindres rotatifs, le produit est obtenu sous forme d'une bande durcie depuis l'interstice entre les cylindres, l'un des cylindres au moins peut être déplacé pour modifier l'épaisseur de l'interstice et les cylindres sont pressés l'un contre l'autre en direction de l'interstice et perpendiculairement à celui-ci avec une force déterminée, caractérisé en ce que l'épaisseur de l'interstice déterminé par la largeur de la bande de produit est dimensionnée de manière qu'une divergence entre l'épaisseur mesurée et une valeur de consigne soit déterminée, et que la vitesse de rotation des cylindres soit réglée à partir de cette divergence de manière qu'elle soit diminuée quand l'épaisseur de la bande dans l'interstice diminue par rapport à la valeur de consigne et qu'elle soit augmentée quand l'épaisseur de la bande dans l'interstice augmente par rapport à la valeur de consigne.